# EUROPEAN PATENT APPLICATION

(11) **EP 4 516 965 A2**
(43) Date of publication of application: **05.03.2025**
(21) Application number: 24188977.3
(22) Date of filing: 16.07.2024
(51) Int. Cl.: C25B 1/04, C25B 1/23, C25B 1/27, C25B 3/03, C25B 3/07, C25B 9/77, C25B 11/03, C25B 11/052, C25B 3/26

(54) **ELECTRODE, MEMBRANE ELECTRODE ASSEMBLY, ELECTROCHEMICAL CELL, STACK, AND ELECTROLYZER**

(30) Priority: 29.08.2023 JP 2023138777
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: FUKAZAWA, Taishi, Tokyo (JP); NAKANO, Yoshihiko, Tokyo (JP); YOSHINAGA, Norihiro, Tokyo (JP)
(74) Representative: Marks & Clerk LLP

(57) **Abstract**

An electrode according to an embodiment including a support and a catalyst layer provided on the support and alternately stacked with sheet layers and gap layers. The catalyst layer is for electrolysis. The catalyst layer comprises a first metal which is one or more elements selected from the group consisting of Ir, Ru, Pt, Pd, Hf, V, Au, Ta, W, Nb, Zr, Mo, and Cr, and a second metal which is one or more elements selected from the group consisting of Ni, Co, Mn, Fe, Cu, Al, and Zn. The catalyst layer comprises a first region and a second region. The first metal in the first region is more oxidized than the first metal in the second region. A ratio of the second metal in the first region is greater than the ratio of the second metal in the second region.

## Description

### FIELD

The present embodiments relate to an electrode, a membrane electrode assembly, an electrochemical cell, a stack, and an electrolyzer.

### BACKGROUND

In recent years, electrochemical cells have been actively studied. Among electrochemical cells, for example, a polymer electrolyte electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathode, and noble metal catalysts such as iridium (Ir) nanoparticle catalysts are used for PEMEC anode. Additionally, a method for obtaining hydrogen from ammonia is also considered. In addition, a method for obtaining organic material or carbon monoxide by electrolysis of carbon dioxide is also considered.

### BRIEF DESCRIPTION OF THE DRAWINGS

FIG. 1 is a schematic diagram of an electrode according to an embodiment;
FIG. 2 is a schematic cross-sectional diagram of a catalyst layer according to an embodiment;
FIG. 3 is a schematic diagram of an electrode according to an embodiment;
FIG. 4 is a schematic diagram of an electrode according to an embodiment;
FIG. 5 is a schematic diagram of an electrode according to an embodiment;
FIG. 6 shows analysis spots according to an embodiment;
FIG. 7 is a schematic diagram of a membrane electrode assembly according to an embodiment;
FIG. 8 is a schematic diagram of an electrochemical cell according to an embodiment;
FIG. 9 is a schematic diagram of a stack according to an embodiment;
FIG. 10 is a schematic diagram of an electrolyzer according to an embodiment.

### DETAILED DESCRIPTION

An electrode according to an embodiment including a support and a catalyst layer provided on the support and alternately stacked with sheet layers and gap layers. The catalyst layer is for electrolysis. The catalyst layer includes a first metal which is one or more elements selected from the group consisting of Ir, Ru, Pt, Pd, Hf, V, Au, Ta, W, Nb, Zr, Mo, and Cr, and a second metal which is one or more elements selected from the group consisting of Ni, Co, Mn, Fe, Cu, Al, and Zn. The catalyst layer includes a first region and a second region. The first metal in the first region is more oxidized than the first metal in the second region. A ratio of the second metal in the first region is greater than the ratio of the second metal in the second region.

Hereinafter, the embodiments will be described in detail with reference to the drawings.

It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

### (FIRST EMBODIMENT)

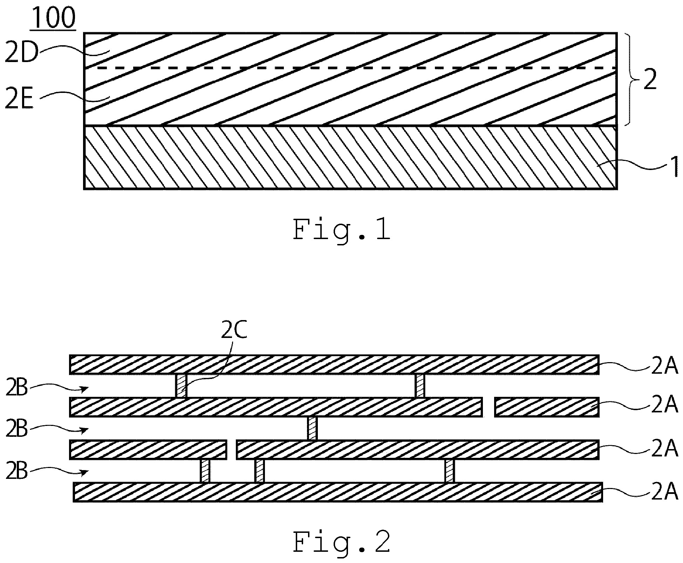

A first embodiment relates to an electrode. A schematic cross-sectional diagram of an electrode 100 according to an embodiment is shown in FIG. 1. The electrode 100 includes a support 1 and a catalyst layer 2.

The catalyst layer 2 is provided on the support 1. The catalyst layer 2 according to the embodiment is used as a catalyst for electrolysis. A reaction of electrolysis is, for example, generating hydrogen from water or ammonia. A reaction of electrolysis is, for example, generating carbon mono-oxide from carbon dioxide. The catalyst layer 2 can be also used as an anode catalyst for electrolysis generation of ammonia.

The electrode 100 according to the first embodiment is used as an anode for water electrolysis. When the catalyst layer 2 further includes a catalyst for a fuel cell, the electrode 100 can be also used as an oxygen electrode of a fuel cell. The electrode 100 according to embodiments can be used as an anode for producing ammonia by electrolysis. The electrode 100 according to embodiments can be used as an anode of an electrolyzer for synthesizing ammonia. Hereinafter, an example of water electrolysis is described in the first embodiment and the other embodiments. The electrode 100 according to embodiments can be also used for other than water electrolysis, for example, as an anode of a membrane electrode assembly for electrolysis of synthesizing ammonia so that ultrapure water is supplied to an anode, proton and oxygen is produced in the anode by decomposing water, the produced proton passes through an electrolyte membrane, and ammonia is synthesized by bonding nitrogen provided to a cathode, protons, and electrons. The electrode 100 according to embodiments can be also used as a cathode for producing hydrogen by electrolyzing ammonia. The electrode 100 according to embodiments can be used as a cathode for a hydrogen generation apparatus. Hereinafter, an example of water electrolysis is described in the first embodiment and the other embodiments. The electrode 100 according to embodiments can be also used for other than water electrolysis, for example, as a cathode of a membrane electrode assembly for electrolysis of decomposing ammonia so that ammonia is supplied to a cathode, proton and nitrogen is produced in the cathode by decomposing ammonia, the produced proton passes through an electrolyte membrane, and hydrogen is synthesized by bonding protons and electrons.

A material having porous and high electric conductivity is preferably used for the support 1. The support 1 is, for example, a porous member in which gas and liquid passes. A titanium support is preferably used for the support 1 because the electrode 100 is uses as an anode of a water electrolysis cell.

It is preferable that the support 1 is a porous conductive member including valve metal. The valve metal for the support 1 is preferably Ti (titanium) having high durability. It is preferable that the support 1 is porous and includes Ti. As the support 1, for example, it is not limited to any particular porous titanium support. The support 1 preferably includes, for example, a Ti mesh or a Ti cloth (non-woven fabric). A coating may be provided on a portion of the surface of the valve metal, such as Ti, to improve the properties of the electrode 100.

When considering the movability of materials, a porosity rate of the support 1 is preferably 20 [%] or more and 95[%] or less and more preferably 40 [%] or more and 90 [%] or less.

For example, when a metal non-woven cloth having titanium fibers intertwined is used as the support 1, a diameter of the fibers of the support 1 is preferably 1 [um] or more and 500 [µm] or less. With respect to reactivity and power supply, the diameter of the fibers of the support 1 is preferably 1 [um] or more and 100 [µm] or less. When the support 1 is formed of sintered particles, the particle diameters of the sintered particles are preferably 1 [um] or more and 500 [µm] or less. With respect to reactivity and power supply, the particle diameters of the sintered particles are preferably 1 [um] or more and 100 [µm] or less.

The support 1 may be partially oxidized.

The catalyst layer 2 includes a first metal which is one or more elements selected from the group consisting of Ir, Ru, Pt, Pd, Hf, V, Au, Ta, W, Nb, Zr, Mo, and Cr, and a second metal which is one or more elements selected from the group consisting of Ni, Co, Mn, Fe, Cu, Al, and Zn. An intermediate layer which is not shown in the drawings may be provided between the catalyst layer 2 and the support 1. The configuration in which the catalyst layer 2 is in direct contact with the support 1 is preferred.

It is preferable that the first metal included in the catalyst layer 2 is included as an oxide of the first metal. It is preferable that the second metal included in the catalyst layer 2 is included as an oxide of the second metal.

The catalyst layer 2 includes the oxide of the first metal and the oxide of the second metal. A complex oxide of the first metal and the second metal may be included in the catalyst layer 2. The catalyst layer 2 may also include the first metal as a metal that is not in the oxide state or/and the second metal as a metal that is not in the oxide state.

It is preferable that 80 [atomic %] or more and 100 [atomic %] or less of metallic element included in the oxide of the first metal is the first metal. It is more preferable that 90 [atomic %] or more and 100 [atomic %] or less of metallic element included in the oxide of the first metal is the first metal.

It is preferable that 80 [atomic %] or more and 100 [atomic %] or less of metallic element included in the oxide of the second metal is the second metal. It is more preferable that 90 [atomic %] or more and 100 [atomic %] or less of metallic element included in the oxide of the second metal is the second metal.

It is preferable that 80 [atomic %] or more and 100 [atomic %] or less of metallic element included in the complex oxide of the first metal and the second metal is sum of the first metal and the second metal. It is more preferable that 90 [atomic %] or more and 100 [atomic %] or less of metallic element included in the complex oxide of the first metal and the second metal is sum of the first metal and the second metal.

The amount of the first metal (weight as the metallic element of compound(s) such as an oxide present in a unit area) in the catalyst layer 2 is preferably 0.02 [mg/cm²] or more and 1.0 [mg/cm²] or less, and more preferably 0.05 [mg/cm²] or more and 0.5 [mg/cm²] or less. The sum of the mass can be measured by ICP-MS.

The porosity ratio of the catalyst layer 2 is preferably 10 [%] or more and 90 [%] or less, and more preferably 30 [%] or more and 70 [%] or less .

The catalyst layer 2 has a structure of alternately stacked with sheet layers 2A and gap layers 2B. The stacking structure of the catalyst layer 2 is shown in the schematic cross-sectional diagram of the catalyst layer 2 of FIG. 2. The sheet layers 2A and the gap layers 2B are stacked approximately in parallel. The gap layer 2B is mostly hollow, but part of the sheet layer 2A protrudes and the sheet layer 2A is connected to the other sheet layer 2A. The sheet layer 2A is connected by columnar units 2C that is present in the gap layer 2B, which maintains the laminated structure.

Each the sheet layer 2A is preferably in direct contact with the gap layer 2B which is adjacent to the sheet layer 2A. It is preferable that only one gap layer 2B is provided in each region between the sheet layers 2A.

The sheet layer 2A is a layer of catalyst particles, which are non-supported metal oxide particles which are aggregated in sheet form. There are some voids in the sheet layer 2A. The sheet layer 2A is a dense layer including a lot of the catalyst particles.

The gap layer 2B is a region between the sheet layers 2A and includes catalyst particles, which are non-supported metal oxide particles. Unlike the sheet layer 2A, the gap layer 2B does not have a regular structure of the catalyst particles. The gap layer is a region with a low density of the catalyst particles.

An average thickness of one layer of the sheet layers 2A is preferably 6 [nm] or more and 50 [nm] or less. An average thickness of one layer of the gap layers 2B is preferably 6 [nm] or more and 50 [nm] or less. The average thickness of one layer of the sheet layers 2A is preferably thicker than the average thickness of one layer of the gap layers 2B. One or more of the gap layers 2B may be thicker than one or more of a portion of the sheet layers 2A.

The catalyst layer 2 includes an oxide as the oxide of the first metal including one element selected from the group consisting of Ir, Ru, Pt, Pd, Hf, V, Au, Ta, W, Nb, Zr, Mo, and Cr or/and the complex oxide including two or more elements selected from the group consisting of Ir, Ru, Pt, Pd, Hf, V, Au, Ta, W, Nb, Zr, Mo, and Cr. The oxide including one element selected from the group consisting of Ir, Ru, Pt, Pd, Hf, V, Au, Ta, W, Nb, Zr, Mo, and Cr is an oxide of one element selected from the group consisting of Ir, Ru, Pt, Pd, Hf, V, Au, Ta, W, Nb, Zr, Mo, and Cr or/and a complex oxide of one element selected from the group consisting of Ir, Ru, Pt, Pd, Hf, V, Au, Ta, W, Nb, Zr, Mo, and Cr and one or more metallic elements (excluding oxygen) other than the first metal. The complex oxide including two or more elements selected from the group consisting of Ir, Ru, Pt, Pd, Hf, V, Au, Ta, W, Nb, Zr, Mo, and Cr is an oxide of two or more elements selected from the group consisting of Ir, Ru, Pt, Pd, Hf, V, Au, Ta, W, Nb, Zr, Mo, and Cr and/or a complex oxide of two or more elements selected from the group consisting of Ir, Ru, Pt, Pd, Hf, V, Au, Ta, W, Nb, Zr, Mo, and Cr and one or more metallic elements (excluding oxygen) other than the first metal.

The catalyst layer 2 preferably includes Ir as the first metal. The catalyst layer 2 preferably includes an oxide including Ir as the oxide of the first metal.

It is more preferable that the catalyst layer 2 includes an oxide including Ir as the oxide of the first metal and optionally includes an oxide including Ru. The total of the concentrations of Ir and Ru among the noble metals in the catalyst layer 2 is preferably 90 [wt%] or more and 100 [wt%] or less. The noble metals in the noble metal oxide of catalyst layer 2 are not limited to Ir and Ru.

The catalyst layer 2 preferably includes an oxide including one element selected from the group consisting of Ni, Co, Mn, Fe, Cu, Al, and Zn or an oxide including two or more elements from the group consisting of Ni, Co, Mn, Fe, Cu, Al, and Zn. The oxide including one element selected from the group consisting of Ni, Co, Mn, Fe, Cu, Al, and Zn is an oxide of one element selected from the group consisting of Ni, Co, Mn, Fe, Cu, Al, and Zn or/and an oxide including one element selected from the group consisting of Ni, Co, Mn, Fe, Cu, Al, and Zn and one or more metallic elements other than the second metal. The oxide including two or more elements selected from the group consisting of Ni, Co, Mn, Fe, Cu, Al, and Zn is an oxide of two or more elements selected from the group consisting of Ni, Co, Mn, Fe, Cu, Al, and Zn or/and an oxide including two or more elements selected from the group consisting of Ni, Co, Mn, Fe, Cu, Al, and Zn and one or more metallic elements other than the second metal.

The second catalyst layer 2 preferably includes an oxide including Ni that is the second metal. The second metal included in the catalyst layer 2 preferably includes Ni and optionally includes Co or/and Mn. The amount of non-noble metal (total of the metallic element present as a compound, for example, an oxide, or a metallic state) included in the catalyst layer 2 is set to 100 [wt%], and the total ratio (total weight of the metallic element of Ni, Co, and Mn present as a compound, for example, an oxide, or a metallic state to total weight of the non-noble element present as a compound, for example, an oxide, or a metallic state) of Ni, Co, and Mn to the non-noble metals included in the catalyst layer 2 is preferably 80 [wt%] or more and 100 [wt%] or less. When the catalyst layer 2 includes Ni, it is preferably that a ratio of Ni included in a first region 2D is higher than a ratio of Ni included in a second region 2E.

The catalyst layer 2 may include the second metal in a metallic state.

The catalyst layer 2 includes the first region(s) 2D and the second region(s) 2E. It is preferable that the first metal included in the first region is more oxidized than the first metal included in the second region 2E. It is preferable that a ratio [atomic%] ( [Number of atoms of the second metal in the first region 2D included as compound(s) or the other, for example, oxides] / [Number of atoms of all metallic elements in the first region 2D included as compound(s) or the other, for example, oxides]) of the second metal included in the first region 2D is greater than a ratio [atomic%] ( [Number of atoms of the second metal in the second region 2E included as compound(s) or the other, for example, oxides] / [Number of atoms of all metallic elements in the second region 2E included as compounds, for example, oxides]) of the second metal included in the second region 2E.

A distribution of the first region 2D and second region 2E is determined from the relative ratio of the oxidation state of the first metal and the oxidation state of the second metal in the catalyst layer 2 measured by, for example, XPS (X-ray photoelectron spectroscopy) or HAXPES (hard X-ray photoelectron spectroscopy). Whether the first metal in the first region 2D is more oxidized than the first metal in the second region 2E is determined by analyzing the oxidation state of the first metal in the catalyst layer 2 measured by, for example, XPS (X-ray photoelectron spectroscopy) or HAXPES (Hard X-ray Photoelectron Spectroscopy).

The first region 2D is less active than the second region 2E, but the first metal is more durable since the first metal is difficult to elute. The second region 2E is less durable but more active than the first region 2D. To obtain the catalyst layer 2 with high activity and high durability, the catalyst layer 2 includes the first region 2D and the second region 2E, the first metal in the first region 2D is more oxidized than the first metal in the second region 2E, and the ratio [atomic%] of the second metal in the first region 2D is greater than the ratio of the second metal in the second region 2E.

It is preferable that the second metal in the first region 2D is more oxidized than the second metal in the second region 2E. Whether the second metal in the first region 2D is more oxidized than the second metal in the second region 2E is determined by analyzing the oxidation state of the second metal in the catalyst layer 2 measured by, for example, XPS (X-ray photoelectron spectroscopy) or HAXPES (Hard X-ray Photoelectron Spectroscopy).

It is preferable that the first region 2D having a layer shape and the second region 2E has a layer shape. The first region 2D having a layer shape and the second region 2E having a layer shape are preferably stacked alternately. It is preferable that the first region having a layer shape and the second region having a layer shape are stacked in a stacking direction of the sheet layers 2A and the gap layers 2B of the catalyst layer 2. A stacking direction of the first region 2D having a layer shape and the second region 2E having a layer shape would be substantially coincident with the stacking direction of the sheet layer 2A and the gap layer 2B of the catalyst layer 2.

In order to improve the durability, it is preferable that the first region 2D is present on a surface of the catalyst layer 2 opposite to a surface of the catalyst layer 2 on a side of the support 1. Since the first region 2D is present on the surface of the catalyst layer 2 opposite to the surface of the catalyst layer 2 on the side of the support 1, the elution of the first metal having a high electrolytic catalytic activity can be inhibited. When the first region 2D has a layer shape in which the first region 2Dis present on the surface of the catalyst layer 2 opposite to the surface of the catalyst layer 2 on the side of the support 1, the elution of the first metal in the catalyst layer 2 can be more effectively reduced.

In order to improve the durability, it is preferable that the second region 2E is not exposed the surface of the catalyst layer 2 which is opposite to the surface of the catalyst layer 2 on the side of the support 1.

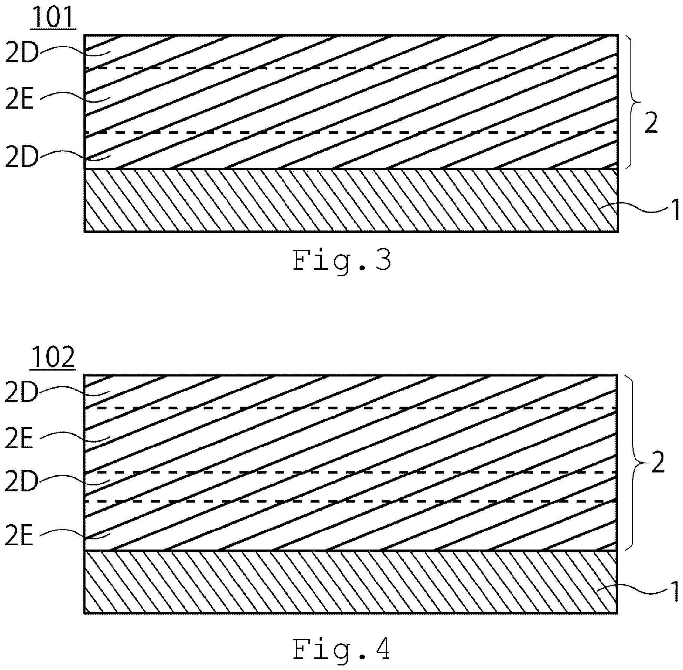

Schematic cross-sectional diagrams of electrodes 101 ~ 103 according to the first embodiment are shown in FIG. 3, FIG. 4, and FIG. 5. The electrodes 101 ~ 103 are variants of the electrode 100. The variants of the electrode 100 are not limited to the electrode 101 ~ 103.

The electrode 101 shown in the schematic cross-sectional diagram of FIG. 3 includes the two first regions 2D each having a layer shape and the one second region 2E having a layer shape. In order to improve the durability, it is preferable that the second region 2E of the electrode 101 is present between the first regions 2D of the electrode 101.

The electrode 102 shown in the schematic cross-sectional diagram of FIG. 4 includes the two first regions 2D each having a layer shape and the two second regions 2E each having a layer shape. The first regions 2D and the second regions 2E are stacked alternately. In order to improve the durability, it is preferable that the second region 2E of the electrode 101 is present between the first regions 2D of the electrode 101.

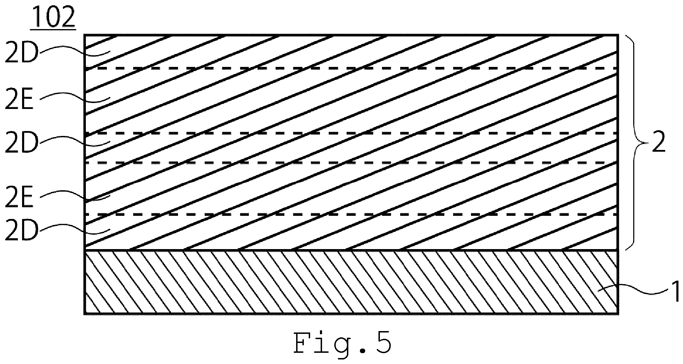

The electrode 103 shown in the schematic cross-sectional diagram of FIG. 5 includes the three first regions 2D each having a layer shape and the two second regions 2E each having a layer shape. The first regions 2D and the second regions 2E are stacked alternately. In order to improve the durability, it is preferable that each of the second region 2E of the electrode 102 is present between the first regions 2D of the electrode 102.

Regarding to the durability and the catalytic activity, it is preferable that an average thickness of the first region 2D having a layer shape is thinner than an average thickness of the second region 2E having a layer shape. When the thickness of the first region 2D having a layer shape is thicker than the thickness of the second region 2E having a layer shape, the durability is high, but the electrolytic properties may be likely to deteriorate. It is preferable that the average thickness of the first region 2D having a layer shape is 5% or more and 90% or less of the average thickness of the second region 2E having a layer shape.

The average thickness of the first region 2D having a layer shape is an average value of the thickness of each of the first region(s) having a layer shape. The average thickness of the second region 2E having a layer shape is an average value of the thickness of each of the second region(s) having a layer shape.

The difference between the thickness of the first region 2D having a layer shape and the thickness of the second region 2E having a layer shape is due to, for example, a difference between in the number of repetitions of the number of layers of the sheet layer 2A and the number of layers of the gap layers 2B, and/or a difference in the thickness of the sheet layers 2A or/and the gap layer 2B.

The average thickness of the first region 2D having a layer shape and the thickness of the second region 2E having a layer shape are obtained from the relative ratio of the oxidation state of the first metal and the oxidation state of the second metal in the catalyst layer 2 measured by, for example, XPS (X-ray photoelectron spectroscopy) or HAXPES (hard X-ray photoelectron spectroscopy). For example, the average thickness of the first region 2D having a layer shape and the thickness of the second region 2E having a layer shape are obtained by measuring at the central area of the electrode 100.

In order to improve the durability, it is preferable that a porosity of the first region 2D having a layer shape is smaller than a porosity of the second region 2E having a layer shape. Since the porosity of the first region 2D is relatively high, the durability of the electrode 100 is preferably improved. It is preferable that the porosity of the first region 2D having a layer shape is 40% or more and 80% or less of the porosity of the second region 2E having a layer shape (the porosity of the second region having a layer shape is set to X%, and it is preferable that the porosity of the first region 2D having a layer shape 0.4X% or more and 0.8X% or less.) .

The fist region 2D and the second region 2E preferably include Ni. It is preferable that a ratio [atomic %] of Ni included in the first region 2D is higher than a ratio [atomic %] of Ni included in the second region 2E.

The first region 2D has a structure of alternately stacked the sheet layers 2A and the gap layers 2B. The sheet layers 2A of the first region 2D and the gap layers 2B of the first region 2D are stacked approximately in parallel. The gap layer 2B of the first region 2D is mostly hollow, but part of the sheet layer 2A protrudes and the sheet layer 2A is connected to the other sheet layer 2A. The sheet layer 2A of the first region is connected by columnar units 2C that is present in the gap layer 2B of the first region 2D, which maintains the laminated structure.

The second region 2E has a structure of alternately stacked the sheet layers 2A and the gap layers 2B. The sheet layers 2A of the second region 2E and the gap layers 2B of the second region 2E are stacked approximately in parallel. The gap layer 2B of the second region 2E is mostly hollow, but part of the sheet layer 2A protrudes and the sheet layer 2A is connected to the other sheet layer 2A. The sheet layer 2A of the second region 2E is connected by columnar units 2C that is present in the gap layer 2B of the second region 2E, which maintains the laminated structure.

It is preferable that the sheet layer 2A in the first region 2D having a layer shape is in direct contact with the gap layer 2B in the second region 2E, or the gap layer 2B in the first region 2D having a layer shape is in direct contact with the sheet layer 2A in the second region 2E.

The number of layers of the sheet layers 2A in the first region 2D having a sheet shape is preferably two or more. The number of layers of the sheet layers 2A in the first region 2D having a sheet shape is preferably two or more and 50 or less.

The number of layers of the sheet layers 2A in the second region 2E having a sheet shape is preferably two or more. The number of layers of the sheet layers 2A in the second region 2E having a sheet shape is preferably two or more and 50 or less.

A composition ratio of the first metal in the first region 2D is preferably the same or substantially the same as a composition ratio of the first metal in the the second region 2E. The difference between the composition ratio of each of the first metal in the first region 2D and the composition ratio of each of the first metal in the second region 2E is preferably 0% or more and 10% or less (0% ≤ | (composition ratio of each of the first metal in the first region 2D] - [composition ratio of each of the first metal in the second region 2E])/[composition ratio of each of the first metal in the first region 2D] | ≤ 10%). The elements of the first metal in the first region 2D are preferably the same or substantially the same as the elements of the first metal in the second region 2E.

The composition ratio of the second metal in the first region is preferably the same or substantially the same as a composition ratio of the second metal in the second region 2E. The difference between the composition ratio of each of the second metal in the first region 2D and the composition ratio of each of the second metal in the second region 2E is preferably 0% or more and 10% or less (0% ≤ | (composition ratio of each of the second metal in the first region 2D] - [composition ratio of each of the second metal in the second region 2E])/[composition ratio of each of the second metal in the first region 2D] | ≤ 10%). The elements of the second metal in the first region 2D are preferably the same or substantially the same as the elements of the first metal in the second region 2E.

A transition region may be included between the first region 2D and the second region 2E. The transition region is a region which does not satisfy the condition of the first region 2D nor the second region 2E. A thickness of the transition region is preferably 0 [nm] or more and 100 [nm] or less. It is preferable that the thickness of the transition region is less than one tenth of the thickness of the first region 2D and less than one tenth of the thickness of the second region 2E.

When the transition region between the first region 2D and the second region 2E is included, the first region 2D and the second region 2E are connected via the transition region (one surface of the transition region is in direct contact with the first region 2D and another surface of the transition region is in direct contact with the second region 2E). When the thickness of the transition region is less than one tenth of the thickness of the first region 2D and less than one tenth of the thickness of the second region 2E, it is regarded as the first region 2D and the second region 2E are connected via the transition region.

A distribution of the transition region is obtained from the he relative ratio of the oxidation state of the first metal and the oxidation state of the second metal in the catalyst layer 2 measured by, for example, XPS (X-ray photoelectron spectroscopy) or HAXPES (hard X-ray photoelectron spectroscopy).

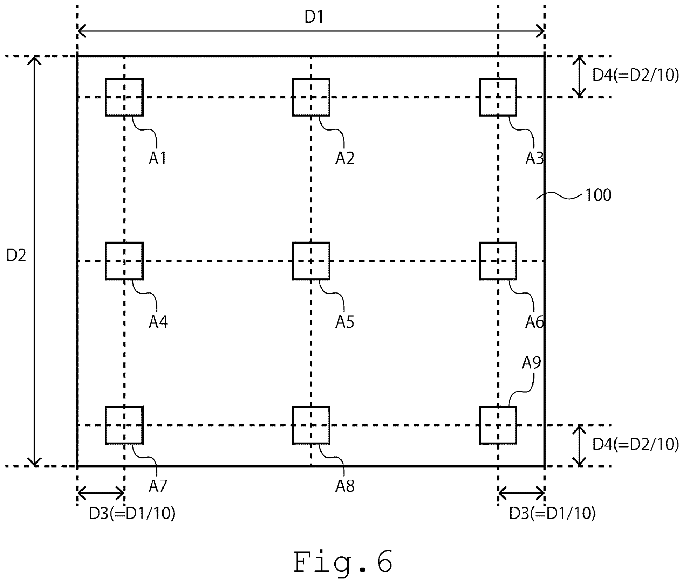

The sheet layer 2A and the gap layer 2B are determined by analyzing plurality of spots. Each spot is square-shaped and has an area of at least 1 mm². Then, as shown in FIG. 6, when the length of the electrode 100 is defined as D1 and the width of the electrode 100 is defined as D2 (D1 ≥ D2), a virtual line is drawn respectively inward at a distance of D3 (=D1/10) from the two opposing sides of the electrode 100 in the width direction, a virtual line is drawn respectively inward at a distance of D4 (=D2/10) inward from the two opposite sides in the length direction of the electrode 100, and then draw a virtual line parallel to the width direction through the center of the electrode 100 and a virtual line parallel to the length direction through the center of the electrode 100. Each area centered at the nine intersection points of the virtual lines is denoted as analysis spots A1 to A9. The cross-section observed by SEM is perpendicular to the plane of FIG. 6 and parallel to the width direction. The thickness of each gap layer 2B in the analysis spots A1 to A9 is determined at intervals of 50 [nm] in the width direction of the SEM image. Then, determine the percentage of the gap layer 2B where the thickness of the gap layer 2B is less than 2 [nm]. The average thicknesses of the gap layers 2B and the average thickness of the sheet layers 2A are obtained in the same manner. A similar analysis using the same SEM-EDX can be used to observe the cross-section of the support 1. By observing the cross-section of the support 1, the thickness of the oxide covering layer of the support 1 and the composition of the support 1 can be obtained.

The catalyst layer 2 is formed by sputtering on the support 1, alternately forming precursor-sheet-layers which are substantially precursor layers of the sheet layers 2A including the oxide of the first metal and forming precursor-gap-layers which are substantially precursor layers of the gap layers 2B mainly including the oxide of the second metal. During the sputtering the precursor-sheet-layers and the precursor-gap-layers are formed in an oxidizing atmosphere. When the precursor-sheet-layers and the precursor-gap-layers are formed in the oxidizing atmosphere, the first region 2D having a layer shape and the second region 2E having a layer shape can be formed (after acid treatment), for example, by changing a concentration of oxygen, respectively. The oxide of the second metal is eluted by acid treatment using, for example, sulfuric acid. After elution of the oxide of the second metal, a heat treatment in an oxidizing atmosphere is preferably processed. After the heat treatment, the electrode 100 whose support 1 has an oxidized coating with an appropriate thickness is obtained. The heat treatment in an oxidizing atmosphere improves the adhesion between the catalyst layer 2 and the support 1.

The portion where the precursor-sheet-layers and the precursor-gap-layers are alternately formed under conditions of a high concentration of oxygen is the precursor of the first region 2D. The portion where the precursor-sheet-layers and the precursor-gap-layers are alternately formed under conditions of a low concentration of oxygen is the precursor of the second region 2E.

A manufacturing method of the electrode 100 will be described with an example of forming the catalyst layer 2 in an oxidizing atmosphere in which the second region 2E and the first region 2D are alternately aligned from the support 1 side and the first region 2D is present on the surface opposite to the support 1 side of the catalyst layer 2. When an oxygen concentration for forming the precursor of the sheet-layer 2A of the first region 2D is set to X1 and an oxygen concentration for the precursor of the gap layer 2B of the first region is set to Y1, an oxygen concentration for forming the precursor of the sheet layer 2A of the second region 2E is preferably 0.2 times or more and 0.8 times or less of X1 and an oxygen concentration for forming the precursor of the gap layer 2B of the second region 2E is preferably 0.2 times or more and 0.8 or less of Y1.

A manufacturing method of the electrode 100 will be described with an example of forming the catalyst layer 2 in an oxidizing atmosphere in which the first region 2D and the second region 2E are alternately aligned from the support 1 side and the first region 2D is present on the surface opposite to the support 1 side of the catalyst layer 2. When an oxygen concentration for forming the precursor of the sheet-layer 2A of the first region 2D is set to X1 and an oxygen concentration for the precursor of the gap layer 2B of the first region is set to Y1, an oxygen concentration for forming the precursor of the sheet layer 2A of the second region 2E is preferably 0.2 times or more and 0.8 times or less of X1 and an oxygen concentration for forming the precursor of the gap layer 2B of the second region 2E is preferably 0.2 times or more and 0.8 or less of Y1.

### (SECOND EMBODIMENT)

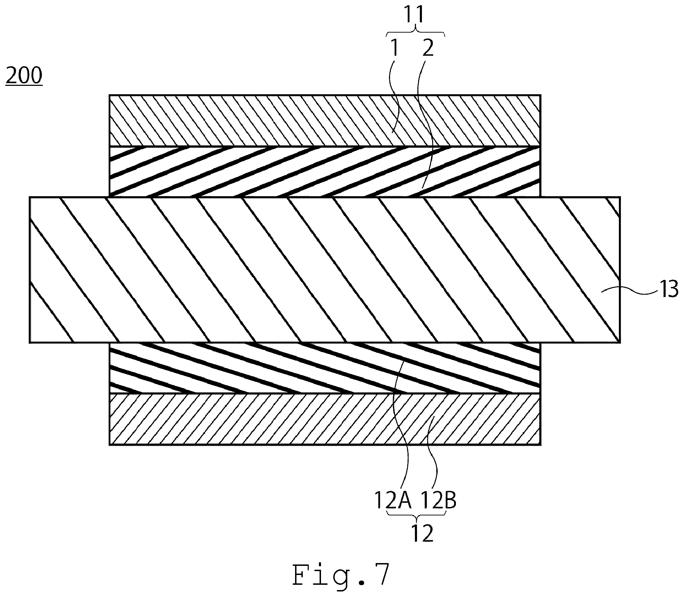

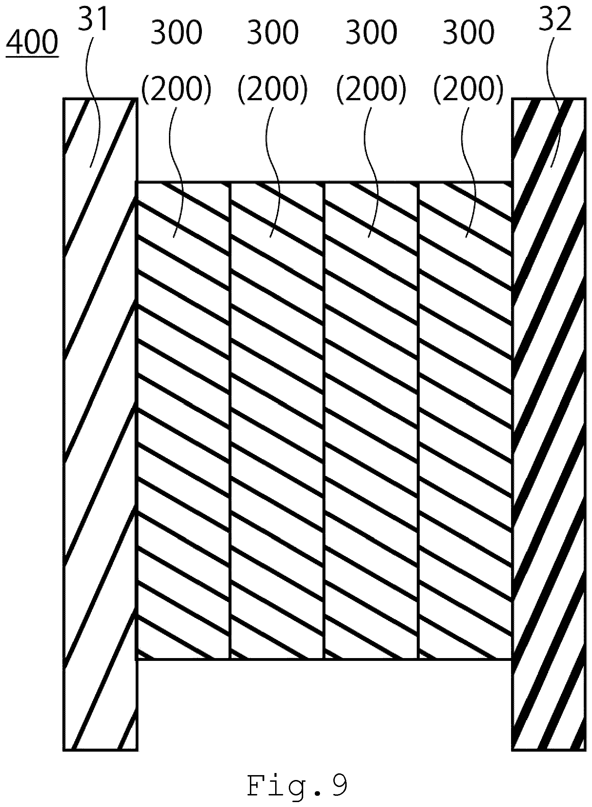

A second embodiment relates to a membrane electrode assembly (MEA). A schematic cross-sectional diagram of a membrane electrode assembly 200 of an embodiment is shown in FIG. 7 second embodiment relates to a membrane electrode assembly (MEA). A schematic cross-sectional diagram of a membrane electrode assembly 200 of an embodiment is shown in FIG. 9. The membrane electrode assembly 200 has a first electrode 11, a second electrode 12, and an electrolyte membrane 13. The first electrode 11 is preferably an anode electrode and the second electrode 12 is preferably a cathode electrode. It is preferred to use the electrode 100 - 103 of the first embodiment for the first electrode 11. The membrane electrode assembly 200 of the embodiment is preferably used in an electrochemical cell or stack for hydrogen generation or oxygen generation.

It is preferable to use the electrode 100 - 103 of the first embodiment for the first electrode 11. The catalyst layer 2 of the electrode 100 used as the first electrode 11 is provided on the electrolyte membrane 13 side. The catalyst layer 2 is preferably in direct contact with the electrolyte membrane 13. The first region 2D of the catalyst layer 2 is preferably in direct contact with the electrolyte membrane 13.

The second electrode 12 includes a second support 12B and a second catalyst layer 12A. The second catalyst layer 12A is provided on the second support 12B. The second catalyst layer 12A is provided on the electrolyte membrane 13 side. The second catalyst layer 12A is preferably in direct contact with the electrolyte membrane 13.

It is preferable to use a porous and highly conductive material as the second support 12B. The second support 12B is a porous material that allows gases and liquids to pass through. The second support 12B is, for example, a carbon paper or a metal mesh. As a metal mesh, a porous support of a valve metal is preferred. It is preferable that the porous support of the valve metal is a porous support including one or more metals selected from the group consisting of titanium, aluminum, tantalum, niobium, hafnium, zirconium, zinc, tungsten, bismuth, and antimony or one metal selected from the group consisting of titanium, aluminum, tantalum, niobium, hafnium, zirconium, zinc, tungsten, bismuth, and antimony. The second support 12B has a carbon layer (MPL layer) containing carbon particles and a water repellent resin (fluororesin such as PTFE, Nafion or the like). The carbon layer is provided, for example, between the carbon paper and the second catalyst layer 12A.

The second catalyst layer 12A includes a catalyst metal. The second catalyst layer 12A is preferably particles of the catalyst metal and the catalyst metal is not supported on a carrier. The second catalyst layer 12A is preferably a porous catalyst layer. The catalyst metal is not limited, but includes, for example, one or more metals selected from the group consisting of Pt, Rh, Os, Ir, Pd, and Au. It is preferred to include one or more selected from the group consisting of such catalytic materials. The catalyst metal is preferably metal, alloy or metal oxide. The second catalyst layer 12A, for example, preferably has a plurality of catalyst units consisting of alternately stacked catalyst layers in sheet layers and gap layers.

The amount of metal per area of the second catalyst layer 12A is preferably 0.02 [mg/cm²] or more and 1.0 [mg/cm²] or less, and more preferably 0.05 [mg/cm²] or more and 0.5 [mg/cm²] or less. The sum of these masses can be measured by ICP-MS.

The porosity ratio of the second catalyst layer 12A is preferably 10 [%] or more and 90 [%] or less, and more preferably 30 [%] or more and 70 [%] or less.

The electrolyte membrane 13 is preferably a proton-conducting membrane. A fluorinated polymer having one or more selected from the group consisting of a sulfonic acid group, a sulfonimide group, and a sulfate group or an aromatic hydrocarbon polymer is preferred as electrolyte membrane 13. The fluorinated polymer having a sulfonic acid group is preferred as electrolyte membrane 13. The fluorinated polymer having a sulfonic acid group which includes, for example, Nafion (trademark DuPont), Flemion (trademark Asahi Kasei), Selemion (trademark Asahi Kasei), Aquivion (trademark Solvay Specialty Polymers) or Aciplex (trademark Asahi Glass Co., Ltd.), etc. can be used. Various conductive membranes such as an anion exchange membrane and a porous membrane may be used instead of the proton-conducting membrane.

A thickness of the electrolyte membrane 13 can be selected according to permeability, durability, and other characteristics of the membrane. From the viewpoint of strength, dissolution resistance, and output power characteristics of the MEA 200, the thickness of the electrolyte membrane 13 is preferably 20 [µm] or more and 500 [µm] or less, more preferably 50 [um] or more and 300 [µm] or less, and still more preferably 80 [µm] or more and 200 [µm] or less.

The electrolyte membrane 13 preferably includes a noble metal region on the side of the first electrode 11. The noble metal region includes noble metal particles. The noble metal region is preferably located on the surface of the electrolyte membrane 13. The noble metal region preferably consists of a single region, but may also consist of a plurality of separate regions.

The noble metal particles are preferably particles of one or more noble metals selected from the group consisting of Pt, Re, Rh, Ir, Pd, and Ru. The noble metal particles may include particles of an alloy including one or more selected from the group consisting of Pt, Re, Rh, Ir, Pd and Ru. The noble metal particles are preferably particles of one noble metal selected from the group consisting of Pt, Re, Rh, Ir, Pd, and Ru. Pt particles are preferred for the noble metal particles. Re particles are preferred for the noble metal particles. Rh particles are preferred for the noble metal particles. Ir particles are preferred for noble metal particles. Pd particles are preferred for noble metal particles. Ru particles are preferred for noble metal particles.

The noble metal particles oxidize hydrogen generated on the cathode side and pass through the electrolyte membrane 13. The noble metal particles can reduce hydrogen leakage. Since the noble metal particles is present on the anode side, the hydrogen discharged from the cathode side is less likely to be oxidized. The area where the noble metal particles is present may also be present in the electrolyte membrane 13 on the second electrode 12 (cathode) side.

An average circumscribed circle diameter of the noble metal particles is preferably 0.5 [nm] or more and 50 [nm] or less, more preferably 1 [nm] or more and 10 [nm] or less is more preferably, and still more preferably 1 [nm] or more and 5 [nm] or less.

By using the high durability electrode 100 - 103 as the anode of the membrane electrode assembly 200, the membrane electrode assembly 200 can be operated for a long time with high activity.

### (THIRD EMBODIMENT)

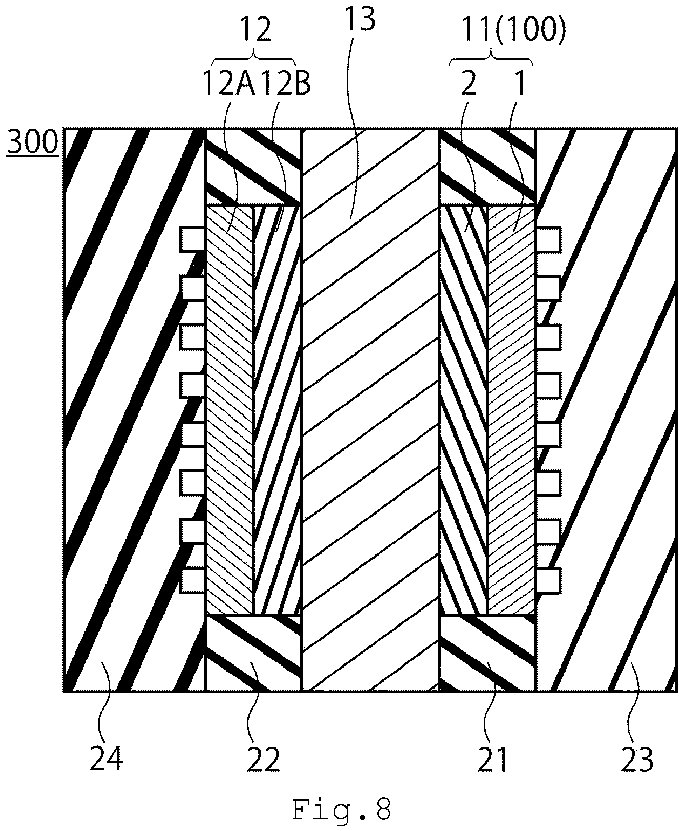

The third embodiment relates to an electrochemical cell. FIG. 8 shows a cross-sectional diagram of the electrochemical cell 300 of the third embodiment. The electrochemical cell 300 will be described below using water electrolysis as an example, but hydrogen can also be generated by decomposing ammonia and other substances other than water.

As shown in FIG. 8, the electrochemical cell 300 of the third embodiment includes the first electrode (anode) 11, the second electrode (cathode) 12, the electrolyte membrane 13, a gasket 21, a gasket 22, a separator 23, and a separator 24. As gasket 21, a seal member of the first electrode 11 may be used. As gasket 22, the seal member of the second electrode 12 may be used.

It is preferable to use a membrane electrode assembly 200 in which the first electrode (anode) 11, the second electrode (cathode) 12, and the electrolyte membrane 13 are bonded together. The anode feeder may be provided separately from the separator 23. The cathode feeder may be provided separately from the separator 24.

In the electrochemical cell 300 of FIG. 8, a power supply, not shown, is connected to the separator 23 and the separator 24, and reactions occur at the anode 11 and the cathode 12. Water or the other is supplied to the anode 11, and at the anode 11, water is decomposed into protons, oxygen and electrons. The support member and the feeder of the electrode is a porous material, and this porous material acts as a flow channel plate. The produced and unreacted water is discharged, while the protons and electrons are used for cathodic reactions. In the cathode reaction, protons and electrons react to produce hydrogen. Either or both the produced hydrogen and the produced oxygen are used, for example, as fuel for fuel cells.

### (FOURTH EMBODIMTNE)

A fourth embodiment relates to a stack. FIG. 9 is a schematic cross-sectional diagram of a stack 400 of the fourth embodiment. The fourth embodiment of the stack 400 shown in FIG. 9 includes a plurality of MEA 200 or electrochemical cells 300 connected in series, with fastening plates 31 and 32 attached to both ends of the MEA or electrochemical cells.

Since the amount of hydrogen produced by an electrochemical cell 300 consisting of a single MEA 200 is small, a stack 400 consisting of multiple MEA 200 or multiple electrochemical cells 300 connected in series can produce a large amount of hydrogen.

### (FIFTH EMBODIMENT)

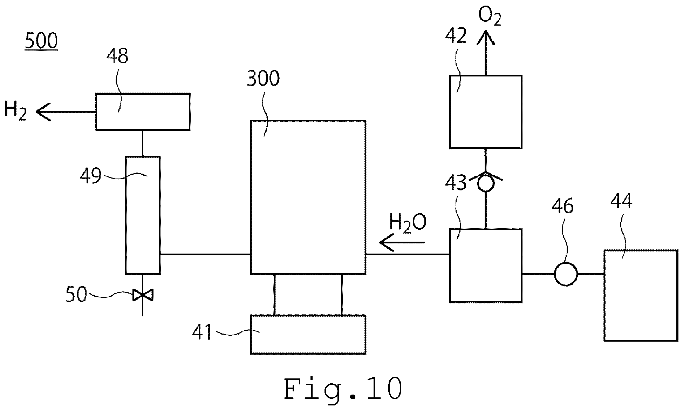

A fifth embodiment relates to an electrolyzer. FIG. 10 shows a conceptual diagram of the electrolyzer of the fifth embodiment. The electrolyzer 500 uses electrochemical cell 300 or stack 400. The electrolyzer 500 in FIG. 12 is for water electrolysis. The electrolyzer 500 for water electrolysis will be described. For example, in the case of hydrogen generation from ammonia, it is preferable to employ an apparatus having different configuration with using the electrode 100. The electrodes of the embodiments can also be used in electrolyzer that electrolyze carbon dioxide to produce organic substances such as methanol and ethylene, or carbon monoxide.

As shown in FIG. 10, single cells for water electrolysis are stacked in series to form a stack 400. The stack 400 is equipped with a power supply 41 and voltage is applied between the anode and the cathode. On the anode side of the stack 400, a gas-liquid separator 42 that separates the generated gas and unreacted water, and a mixing tank 43 are connected, the water is supplied to the mixing tank 43 from an ionexchange water production unit 44 which supplies water by a pump 46, and the water is circulated to the anodes through the check valve 47 from the gas-liquid separator 42 mixed in the mixing tank 43. The oxygen produced at the anode passes through the gas-liquid separator 42, where oxygen gas is obtained. On the cathode side, a hydrogen purifier 49 is connected continuously to the gas-liquid separator 48 to obtain high-purity hydrogen. Impurities are discharged through a path with a valve 50 connected to the hydrogen purifier 49. The stack 400 and mixing tank 43 can be heated to control stable operating temperatures, and the current density during pyrolysis can be controlled.

In the specification, some of the elements are represented by elemental symbols only.

Hereinafter, clauses according to embodiments will be described.
Clause 1. An electrode comprising:
   a support; and
   a catalyst layer provided on the support and alternately stacked with sheet layers and gap layers,
   wherein the catalyst layer is for electrolysis,
   the catalyst layer comprises a first metal which is one or more elements selected from the group consisting of Ir, Ru, Pt, Pd, Hf, V, Au, Ta, W, Nb, Zr, Mo, and Cr, and a second metal which is one or more elements selected from the group consisting of Ni, Co, Mn, Fe, Cu, Al, and Zn,
   the catalyst layer comprises a first region and a second region,
   the first metal in the first region is more oxidized than the first metal in the second region, and
   a ratio of the second metal in the first region is greater than the ratio of the second metal in the second region.
Clause 2. The electrode according to claim 1, wherein
   the first region has a layer shape,
   the second region has a layer shape, and
   the first region having the layer shape and the second region having the layer shape are stacked in a stacking direction of the sheet layers and the gap layers.
Clause 3. The electrode according to claim 1, wherein
   the first region is present on a surface of the catalyst layer opposite to a surface of the catalyst layer on a side of the support.
Clause 4. The electrode according to claim 1, wherein
   the first region has a layer shape,
   the second region has a layer shape,
   the first region having the layer shape and the second region having the layer shape are stacked in a stacking direction of the sheet layers and the gap layers,
   the catalyst layer includes two or more of the first regions having the layer shape, and
   the second region having the layer shape is present between the two or more of the first regions having the layer shape.
Clause 5. The electrode according to claim 1, wherein
   the first region has a layer shape,
   the second region has a layer shape,
   the first region having the layer shape and the second region having the layer shape are stacked in a stacking direction of the sheet layers and the gap layers, and
   an average thickness of the first region having the layer shape is thinner than an average thickness of the second region having the layer shape.
Clause 6. The electrode according to claim 1, wherein
   the first region has a layer shape,
   the second region has a layer shape,
   the first region having the layer shape and the second region having the layer shape each include the sheet layers and the gap layers, and
   the first region having the layer shape and the second region having the layer shape are stacked in a stacking direction of the sheet layers and the gap layers.
Clause 7. The electrode according to claim 1, wherein
   the first region has a layer shape,
   the second region has a layer shape,
   the first region having the layer shape and the second region having the layer shape each include the sheet layers and the gap layers,
   the first region having the layer shape and the second region having the layer shape are stacked in a stacking direction of the sheet layers and the gap layers, and
   the first region having the layer shape is in direct contact with the second region.
Clause 8. The electrode according to claim 1, wherein
   the first region has a layer shape,
   the second region has a layer shape,
   the first region having the layer shape and the second region having the layer shape each include the sheet layers and the gap layers,
   the first region having the layer shape and the second region having the layer shape are stacked in a stacking direction of the sheet layers and the gap layers, and
   the sheet layer of the first region having the layer shape is in direct contact with the gap layer of the second region having the layer shape, or the gap layer of the first region having the layer shape is in direct contact with the sheet layer of the second region.
Clause 9. The electrode according to claim 1, wherein
   the first region has a layer shape,
   the second region has a layer shape,
   the first region having the layer shape and the second region having the layer shape each include the sheet layers and the gap layers,
   Ni is included as the second metal in the first region having the layer shape and the second region having the layer shape, and
   a ratio of Ni included in the first region is higher than a ratio of Ni included in the second region.
Clause 10. The electrode according to claim 1, wherein
   the first region has a layer shape,
   the second region has a layer shape,
   the first region having the layer shape and the second region having the layer shape each include the sheet layers and the gap layers, and
   a porosity of the first region having the layer shape is lower than a porosity of the second region having the layer shape.
Clause 11. The electrode according to claim 1, wherein
   the first region has a layer shape,
   the second region has a layer shape,
   the first region having the layer shape and the second region having the layer shape are stacked in a stacking direction of the sheet layers and the gap layers,
   the catalyst layer includes two or more of the first regions having the layer shape,
   the second region is present between the two or more of the first regions having the layer shape,
   an average thickness of the first region having the layer shape is thinner than an average thickness of the second region having the layer shape,
   the first region having the layer shape is in direct contact with the second region,
   Ni is included as the second metal in the first region having the layer shape and the second region having the layer shape,
   a ratio of Ni included in the first region is higher than a ratio of Ni included in the second region, and
   a porosity of the first region having the layer shape is lower than a porosity of the second region having the layer shape.
Clause 12. A membrane electrode assembly comprising:
   the electrode according to any oner of claims 1 to 11; and
   an electrolyte membrane,
   wherein the electrolyte membrane is in direct contact with the first region.
Clause 13. An electrochemical cell comprising:
   the membrane electrode assembly according to claim 12.
Clause 14. A stack comprising:
   the membrane electrode assembly according to claim 12.
Clause 15 An electrolyzer comprising:
   the stack according to claim 14.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. For, example, the color "Yellow" is can be replaced by the expression "yellowish color".

## Claims

1. An electrode comprising:
a support; and
a catalyst layer provided on the support and alternately stacked with sheet layers and gap layers,
wherein the catalyst layer is for electrolysis,
the catalyst layer comprises a first metal which is one or more elements selected from the group consisting of Ir, Ru, Pt, Pd, Hf, V, Au, Ta, W, Nb, Zr, Mo, and Cr, and a second metal which is one or more elements selected from the group consisting of Ni, Co, Mn, Fe, Cu, Al, and Zn,
the catalyst layer comprises a first region and a second region,
the first metal in the first region is more oxidized than the first metal in the second region, and
a ratio of the second metal in the first region is greater than the ratio of the second metal in the second region.

2. The electrode according to claim 1, wherein
the first region has a layer shape,
the second region has a layer shape, and
the first region having the layer shape and the second region having the layer shape are stacked in a stacking direction of the sheet layers and the gap layers.

3. The electrode according to claim 1, wherein
the first region is present on a side of the catalyst layer opposite to a surface of the catalyst layer on a side of the support.

4. The electrode according to claim 1, wherein
the first region has a layer shape,
the second region has a layer shape,
the first region having the layer shape and the second region having the layer shape are stacked in a stacking direction of the sheet layers and the gap layers,
the catalyst layer includes two or more of the first regions having the layer shape, and
the second region having the layer shape is present between the two or more of the first regions having the layer shape.

5. The electrode according to claim 1, wherein
the first region has a layer shape,
the second region has a layer shape,
the first region having the layer shape and the second region having the layer shape are stacked in a stacking direction of the sheet layers and the gap layers, and
an average thickness of the first region having the layer shape is thinner than an average thickness of the second region having the layer shape.

6. The electrode according to claim 1, wherein
the first region has a layer shape,
the second region has a layer shape,
the first region having the layer shape and the second region having the layer shape each include the sheet layers and the gap layers, and
the first region having the layer shape and the second region having the layer shape are stacked in a stacking direction of the sheet layers and the gap layers.

7. The electrode according to claim 1, wherein
the first region has a layer shape,
the second region has a layer shape,
the first region having the layer shape and the second region having the layer shape each include the sheet layers and the gap layers,
the first region having the layer shape and the second region having the layer shape are stacked in a stacking direction of the sheet layers and the gap layers, and
the first region having the layer shape is in direct contact with the second region.

8. The electrode according to claim 1, wherein
the first region has a layer shape,
the second region has a layer shape,
the first region having the layer shape and the second region having the layer shape each include the sheet layers and the gap layers,
the first region having the layer shape and the second region having the layer shape are stacked in a stacking direction of the sheet layers and the gap layers, and
the sheet layer of the first region having the layer shape is in direct contact with the gap layer of the second region having the layer shape, or the gap layer of the first region having the layer shape is in direct contact with the sheet layer of the second region.

9. The electrode according to claim 1, wherein
the first region has a layer shape,
the second region has a layer shape,
the first region having the layer shape and the second region having the layer shape each include the sheet layers and the gap layers,
Ni is included as the second metal in the first region having the layer shape and the second region having the layer shape, and
a ratio of Ni included in the first region is higher than a ratio of Ni included in the second region.

10. The electrode according to claim 1, wherein
the first region has a layer shape,
the second region has a layer shape,
the first region having the layer shape and the second region having the layer shape each include the sheet layers and the gap layers, and
a porosity of the first region having the layer shape is lower than a porosity of the second region having the layer shape.

11. The electrode according to claim 1, wherein
the first region has a layer shape,
the second region has a layer shape,
the first region having the layer shape and the second region having the layer shape are stacked in a stacking direction of the sheet layers and the gap layers,
the catalyst layer includes two or more of the first regions having the layer shape,
the second region is present between the two or more of the first regions having the layer shape,
an average thickness of the first region having the layer shape is thinner than an average thickness of the second region having the layer shape,
the first region having the layer shape is in direct contact with the second region,
Ni is included as the second metal in the first region having the layer shape and the second region having the layer shape,
a ratio of Ni included in the first region is higher than a ratio of Ni included in the second region, and
a porosity of the first region having the layer shape is lower than a porosity of the second region having the layer shape.

12. A membrane electrode assembly comprising:
the electrode according to any one of claims 1 to 11; and
an electrolyte membrane,
wherein the electrolyte membrane is in direct contact with the first region.

13. An electrochemical cell comprising:
the membrane electrode assembly according to claim 12.

14. A stack comprising:
the membrane electrode assembly according to claim 12.

15. An electrolyzer comprising:
the stack according to claim 14.
